# EUROPEAN PATENT SPECIFICATION

(11) **EP 2 482 585 B1**
(45) Date of publication and mention of the grant of the patent: **08.08.2018**
(21) Application number: 10788982.6
(22) Date of filing: 25.06.2010
(51) Int. Cl.: H04W 36/00, H04L 29/12

(54) **METHOD AND SYSTEM FOR REALIZING TERMINAL HANDOVER**
VERFAHREN UND SYSTEM ZUR ÜBERGABE EINES ENDGERÄTS
PROCÉDÉ ET SYSTÈME POUR EFFECTUER UN TRANSFERT DE TERMINAL

(30) Priority: 30.10.2009 CN 200910205939
(43) Date of publication of application: 01.08.2012
(73) Proprietor: ZTE Corporation, Shenzhen, Guangdong 518057 (CN)
(72) Inventor: JIN, Youxing, Shenzhen Guangdong 518057 (CN); XU, Zhijun, Shenzhen Guangdong 518057 (CN); WU, Qiang, Shenzhen Guangdong 518057 (CN); FU, Tao, Shenzhen Guangdong 518057 (CN)
(74) Representative: AWA Sweden AB
(86) International application number: PCT/CN2010/074537
(87) International publication number: WO 2010/145586

(56) References cited:
- EP-A1- 2 480 011
- EP-A1- 2 480 033
- WO-A1-2009/078534
- CN-A- 101 043 737
- CN-C- 100 441 043
- US-A1- 2009 129 335
- ZHIWEI YAN ET AL: "A novel mobility management mechanism based on an efficient Locator/ID separation scheme", FUTURE INFORMATION NETWORKS, 2009. ICFIN 2009. FIRST INTERNATIONAL CONFERENCE ON, IEEE, PISCATAWAY, NJ, USA, 14 October 2009 (2009-10-14), pages 11-16, XP031570381, DOI: 10.1109/ICFIN.2009.5339610 ISBN: 978-1-4244-5158-6
- MIN-KYO IN ET AL: "Splitting mechanism for IP into Identifier and Locator in NGN", TOWARD NETWORK INNOVATION BEYOND EVOLUTION : THE 9TH INTERNATIONAL CONFERENCE ON ADVANCED COMMUNICATION TECHNOLOGY ; ICACT 2007 ; PHOENIX PARK, KOREA, FEB. 12 - 14, 2007 ; PROCEEDINGS, IEEE TECHNICAL ACTIVITIES, PISCATAWAY, NJ, USA, 1 February 2007 (2007-02-01), pages 1974-1977, XP031085134, ISBN: 978-89-5519-131-8
- "General requirements for ID/locator separation in NGN; Y.2015 (01/09)", ITU-T STANDARD, INTERNATIONAL TELECOMMUNICATION UNION, GENEVA ; CH, no. Y.2015 (01/09), 23 January 2009 (2009-01-23), pages 1-24, XP017466982, [retrieved on 2009-09-18]
- VED P KAFLE ET AL: "An ID/locator split architecture of future networks", INNOVATIONS FOR DIGITAL INCLUSIONS, 2009. K-IDI 2009. ITU-T KALEIDOSCOPE:, IEEE, PISCATAWAY, NJ, USA, 31 August 2009 (2009-08-31), pages 1-8, XP031570213, ISBN: 978-92-61-12891-3
- LEWIS D MEYER D FARINACCI V FULLER CISCO SYSTEMS D ET AL: "Interworking LISP with IPv4 and IPv6; draft-lewis-lisp-interworking-02.txt", INTERWORKING LISP WITH IPV4 AND IPV6; DRAFT-LEWIS-LISP-INTERWORKING-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 27 January 2009 (2009-01-27), XP015061518,

## Description

### Technical Field

The present invention relates to a network with an ID/Locator separation architecture, and particularly to a method and a system for implementing terminal handover.

### Background of the Related Art

At present, the Internet Protocol (IP) address in the Transmission Control Protocol/Internet Protocol (TCP/IP) widely used in the internet has a dual function, i.e., it serves as a location identifier of a host network interface of a communication terminal of the network layer in the network topology, and also serves as an identity identifier of a host network interface of the transport layer. The mobility of a host was not taken into consideration when the TCP/IP was initially designed. When a mobile host is more and more common, however, a defect of semantic overload of such IP address has become increasingly evident. When the IP address of a host changes, not only the routing changes, the identity identifier of a host of a communication terminal also changes, which will cause a more and more heavy load, and a change of a host identifier will cause an interrupt of an application and a connection.

The purpose of proposing separating an identity identifier from a location identifier is to solve problems such as semantic overload of an IP address, severe routing load and security, and the dual function of the IP address is separated to realize support for the problems such as mobility, multi-home, IP address dynamic redistribution, reducing the routing load and inter-access between different network areas in the next-generation network.

There is no related method for implementing terminal handover yet to ensure that the services of a terminal are not interrupted in the case of a user moving within a network with an architecture in which an identity identifier and a location are separate intercommunicates with traditional networks.

In the non-patent document LEWIS D MEYER D FARINACCI V FULLER CISCO SYSTEMS D ET AL: "Interworking LISP with IPv4 and IPv6; draft-lewis-lisp-interworking-02.txt", INTERWORKING LISP WITH IPV4 AND IPV6; DRAFT-LEWIS-LISP-INTERWORKING-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 27 January 2009 (2009-01-27), XP015061518, it describes techniques for allowing sites running the Locator/ID Separation Protocol (LISP [LISP]) to interoperate with Internet sites not running LISP. A fundamental property of LISP-speaking sites is that they use Endpoint Identifiers (EIDs), rather than traditional IP addresses, in the source and destination fields of all traffic they emit or receive. While EIDs are syntactically identical to IP addresses, routes for them are not carried in the global routing system so an interoperability mechanism is needed for non-LISP-speaking sites to exchange traffic with LISP-speaking sites. This document introduces two such mechanisms: the first uses a new network element, the LISP Proxy Tunnel Router (PTR) (Section 5) to act as a intermediate LISP Ingress Tunnel Router (ITR) or non-LISP speaking hosts while the second adds Network Address Translation (NAT) functionality to LISP Ingress and LISP Egress Tunnel Routers (xTRs) to substitute routable IP addresses for non-routable EIDs.

The document ZHIWEI YAN ET AL: "A Novel Mobility Management Mechanism Based On An Efficient Locator/ID Separation Scheme", FUTURE INFORMATION NETWORKS, 2009. ICFIN 2009. FIRST INFORMATIONAL CONFERENCE ON, IEEE, PISCATAWAY,NJ,USA, 14 October 2009 discloses a mobility management mechanism on ths basis of an efficient and scalable Locator/ID separation (LIDS) architecture. There are two contributions of the document. Firstly, it is to separate the access network from the core network. Besides, it is to provide seamless mobility support, locator/ID separation is used which can provide transparency to the upper layer application.

### Summary of the Invention

The technical problem the present invention solves is to provide a method and a system for implementing terminal handover, to implement a location handover of a terminal and maintain continuity of services when a network with an ID/Locator separation architecture intercommunicates with traditional networks.

The features of the method and the system according to the present invention are defined in the independent claims.

Also provided is a method for implementing terminal handover, which is applied in a network with an ID/Locator separation architecture, in which an Access Identifier (AID) serves as a user identity identifier of a terminal, and a Routing Identifier (RID) serves as a location identifier of the terminal, and the terminal intercommunicates with a correspondent node in a traditional network by an ISN (Intercommunication Service Node), and the method comprises:
when the terminal communicates with the correspondent node in the traditional network, a source Access Service Node (ASN) knowing that the terminal needs a handover, and making a request for a handover to a target ASN;
the target ASN responding to the request of the source ASN, the source ASN sending information of the correspondent node of the terminal to the target ASN; and after the handover between the source ASN and the target ASN is completed, the target ASN assigning to the terminal a RID pointing to the ASN itself; and sending updated AID-RID mapping information of the terminal to the ISN through which the terminal communicates with the correspondent node in the traditional network according to the information of the correspondent node of the terminal.

The above method further comprises: the ISN by which the terminal communicates with the correspondent node in the traditional network updating the AID-RID mapping information of the terminal, and sending a message for acknowledging completion of RID update to the target ASN.

The above method further comprises: if the terminal has multiple correspondent nodes in the traditional network, and it is not a same ISN through which the terminal communicates with the multiple correspondent nodes, then the target ASN shall send the updated RID of the terminal to each ISN by which the terminal communicates with the multiple correspondent nodes.

After the step of the target ASN assigning to the terminal a RID pointing to the ASN itself, the method further comprises: updating the AID-RID mapping information of the terminal stored in an identity location register (ILR) of a home domain of the terminal.

The above method further comprises: the target ASN sending the updated RID of the terminal to the ISN by which the terminal communicates with the correspondent node in the traditional network by a RID update message; and
the message for acknowledging completion of RID update sent by the ISN by which the terminal communicates with the correspondent node in the traditional network is a RID update acknowledge (Update RID ACK) message.

The step of the source ASN being informed that the terminal needs a handover comprises:
the terminal performing interaction and detection with a source access network that the terminal accesses, and the terminal, the source access network or the source ASN that the terminal accesses judging whether the terminal needs a cross-ASN handover;
if the source access network judges whether the terminal needs a cross-ASN handover, when a cross-ASN handover is needed, notifying the source ASN that the terminal needs a cross-ASN handover; and
if the terminal judges whether a cross-ASN handover is required, when a cross-ASN handover is needed, notifying the source access network that a handover is needed, and then the source access network notifying the source ASN that the terminal needs a handover.

Also provided is a method for implementing terminal handover, applied in a network with an architecture in which an identity identifier and a location are separate, wherein, in the network an Access Identifier (AID) serves as a user identity identifier of a terminal, and a Routing Identifier (RID) serves as a location identifier of the terminal, the terminal intercommunicates with a correspondent node in a traditional network by an ISN (Intercommunication Service Node), and the method comprises:
when the terminal communicates with the correspondent node in the traditional network, a source Access Service Node (ASN) knowing that the terminal needs a handover, and making a request for a handover to a target ASN;
the target ASN responding to the request of the source ASN, the source ASN sending information of the correspondent node of the terminal to an Identity Location Register (ILR) of a home domain of the terminal;
after the handover between the source ASN and the target ASN is completed, the target ASN assigning to the terminal a RID pointing to the ASN itself; and updating AID-RID mapping information of the terminal stored in the ILR of the home domain of the terminal; and
the ILR sending the updated AID-RID mapping information of the terminal to the ISN through which the terminal communicates with the correspondent node in the traditional network according to the information of the correspondent node of the terminal.

Also provided is a method for implementing terminal handover, applied in a network with an architecture in which an identity identifier and a location are separate, wherein, in the network an Access Identifier (AID) serves as a user identity identifier of a terminal, and a Routing Identifier (RID) serves as a location identifier of the terminal, the terminal intercommunicates with a correspondent node in a traditional network by an ISN (Intercommunication Service Node), and the method comprises:
when the terminal communicates with the correspondent node in the traditional network, a source Access Service Node (ASN) knowing that the terminal needs a handover, and making a request for a handover to a target ASN;
the target ASN responding to the request of the source ASN, the source ASN sending information of the correspondent node of the terminal to an Identity Location Register (ILR) of a home domain of the terminal, and the ILR sending the information of the correspondent node of the terminal to the target ASN; and
after the handover between the source ASN and the target ASN is completed, the target ASN assigning to the terminal a RID pointing to the ASN itself; and sending updated AID-RID mapping information of the terminal to an ISN through which the terminal communicates with the correspondent node in the traditional network according to the information of the correspondent node of the terminal.

Also provided is a system with an architecture in which an identity identifier and a location identifier are separate, comprising an access service node (ASN), an identity location register (ILR) and an intercommunication service node (ISN), the ASN being a boundary node adjoining a radio access network and a packet data network, wherein:
the ILR is configured to: store mapping information of an identity identifier and a location identifier of a terminal and provide a function of querying the location identifier;
the ISN is configured to: implement intercommunication between the architecture and a traditional network;
the ASN is configured to: provide an access service for the terminal to access the packet data network, assign a location identifier for the accessing terminal, and maintain the mapping information of the identity identifier and the location identifier of the terminal; and
respond to a received handover request and, after receiving information of a correspondent node of the terminal and the handover with a handover-out ASN is completed, assign to the terminal a location identifier pointing to the ASN itself; and send updated mapping information of the identity identifier and a location identifier of the terminal to an ISN through which the terminal communicates with the correspondent node in the traditional network according to the information of the correspondent node of the terminal.

The ASN is further configured to: after knowing that the terminal needs a handover, make a request for a handover to a handover-in ASN; and after receiving a response from the handover-in ASN, send the information of the correspondent node of the terminal to the handover-in ASN.

The ISN is further configured to: after receiving the mapping information of the identity identifier and the location identifier of the terminal, update the locally stored mapping information of the identity identifier and the location identifier of the terminal, and send a message for acknowledging completion of location identifier update to the ASN.

When the terminal has multiple correspondent nodes in the traditional network, and it is not a same ISN through which the terminal communicates with the multiple correspondent nodes, the ASN is further configured to: send the updated location identifier of the terminal to each ISN by which the terminal communicates with the multiple correspondent nodes.

The ASN is further configured to: after assigning to the terminal the location identifier pointing to the ASN itself, update mapping information of the identity identifier and the location identifier of the terminal stored in the ILR of a home domain of the terminal.

Also provided is a system with an architecture in which an identity identifier and a location identifier are separate, comprising an access service node (ASN), an identity location register (ILR) and an intercommunication service node (ISN), the ASN being a boundary node adjoining a radio access network and a packet data network, wherein:
the ILR is configured to: store mapping information of an identity identifier and a location identifier of the terminal and provide a function of querying the location identifier;
the ISN is configured to: implement intercommunication between the architecture and a traditional network;
the ASN is configured to: provide an access service from a terminal to the packet data network, assign a location identifier for the accessing terminal, and maintain mapping information of the identity identifier and the location identifier of the terminal;
the ASN comprises: a handover-out control unit and a handover-in control unit;
the handover-out control unit is configured to: after knowing that the terminal needs a handover, make a request for a handover to a handover-in ASN; and after receiving a response from the handover-in ASN, send information of a correspondent node of the terminal to the ILR of a home domain of the terminal;
the handover-in control unit is configured to: responds to a received handover request and, after the handover with a handover-out ASN is completed, assign to the terminal a location identifier pointing to the ASN itself; and update the mapping information of the identity identifier and the location identifier of the terminal stored in the ILR of the home domain of the terminal;
the ILR is further configured to: send the updated mapping information of the identity identifier and the location identifier of the terminal to the ISN by which the terminal communicates with the correspondent node in the traditional network according to the information of the correspondent node of the terminal.

Also provided is a system with an architecture in which an identity identifier and a location identifier are separate, comprising an access service node (ASN), an identity location register (ILR) and an intercommunication service node (ISN), the ASN being a boundary node adjoining a radio access network and a packet data network, wherein:
the ILR is configured to: store mapping information of an identity identifier and a location identifier of the terminal and provide a function of querying the location identifier;
the ISN is configured to: implement intercommunication between the architecture and a traditional network;
the ASN is configured to: provide an access service from a terminal to the packet data network, assign a location identifier for the accessing terminal, and maintain mapping information of the identity identifier and the location identifier of the terminal;
the ASN comprises: a handover-out control unit and a handover-in control unit;
the handover-out control unit is configured to: after knowing that the terminal needs a handover, make a request for a handover to a handover-in ASN; and after receiving a response from the handover-in ASN, send information of a correspondent node of the terminal to the ILR of a home domain of the terminal;
the ILR is configured to: send the information of the correspondent node of the terminal to the handover-in control unit of the handover-in ASN;
the handover-in control unit is configured to: respond to a received handover request and, after the handover with a handover-out ASN is completed, assign to the terminal a location identifier pointing to the ASN itself; and send updated mapping information of the identity identifier and the location identifier of the terminal to the ISN by which the terminal communicates with the correspondent node according to information of the correspondent node of the terminal.

In conclusion, the method according to the present invention can ensure that an on-going communication service between a terminal and a traditional network can not be interrupted by a handover during a process of handover of the ASN of the terminal, and the handover according to the present invention is fast such that a subscriber does not feel the process of the handover, and the upper-layer service maintains continuity; and can support handover processing when the terminal communicates with multiple correspondent nodes; there is data forwarding mechanism between ASNs by which data may be forwarded to a handover-to ASN, thus reducing the probability of data packet dropout.

### Brief Description of Drawings

FIG. 1 is an architecture diagram of a network in which an identity identifier and a location identifier are separate;
FIG. 2 is a flowchart of a method for implementing terminal handover according to an embodiment of the present invention.

### Preferred Embodiments of the Present Invention

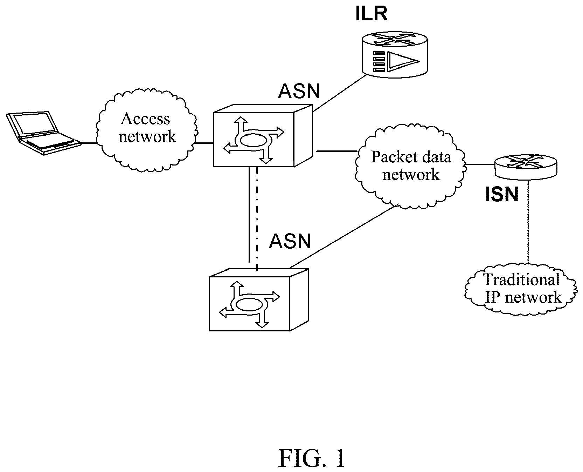

FIG. 1 shows part of the topology of a network in which an identity identifier and a location identifier are separate, comprising an access network, an access service node (ASN), a packet data network, an identity location register (ILR) and an intercommunication gateway, where the access service node, packet data network, identity location register and the intercommunication gateway are components of a backbone network.

There are two identifier types in the network of this architecture: Access Identifier (AID) and Routing Identifier (RID). Wherein AID is a user identity identifier of a terminal, which is used to identify the identity of a terminal user (also called as a user), the network assigns an AID for each terminal user uniquely for use in the access network, and the AID keeps unchanged during a movement process of the terminal; the RID is a location identifier assigned for the terminal and used in the backbone network. Wherein,
the access network provides a two-layer (physical layer, link layer) access service, and the access network may be a cellular mobile network, DSL, broadband fiber access network or a WiFi access network, and so on.

The packet data network is used to implement routing and forwarding of data messages, and may be an IP network.

The access service node is a boundary node adjoining a radio access network and a packet data network, and is used to provide an access service from a terminal to the packet data network, and in order to implement separation of an identity identifier from a location of the terminal, the access service node is also used to assign a RID for the terminal, and maintain AID-RID mapping information of the terminal, and register and query the RID of the terminal in the ILR, to implement routing and forwarding of a data message between the radio access network and the packet data network, and implement terminal handover in combination with other access service nodes, and so on. The access service node may correspond to one or more nodes in the existing network.

The identity location register is used to store AID-RID mapping information of the terminal and provide a function of querying RID of a correspondent node.

The above network may also comprise a packet forwarding function PTF (Packet Transfer Function), the PTF and the ILR may be co-provided and are used to receive a data message with a destination address of an AID, replace the AID with a RID of a queried correspondent node (which may be queried from the ILR or a local cache for example), and then route and forward the data message to an ASN accessed by the terminal.

The network with an architecture in which the identity identifier and the location are separate and the terminal that can access the network constitute a system with a network architecture in which the identity identifier and the location are separate.

The intercommunication gateway (ISN), is an intercommunication node by which the ID/Locator separation architecture intercommunicates with other networks. Two different types of networks have to communicate by the ISN.

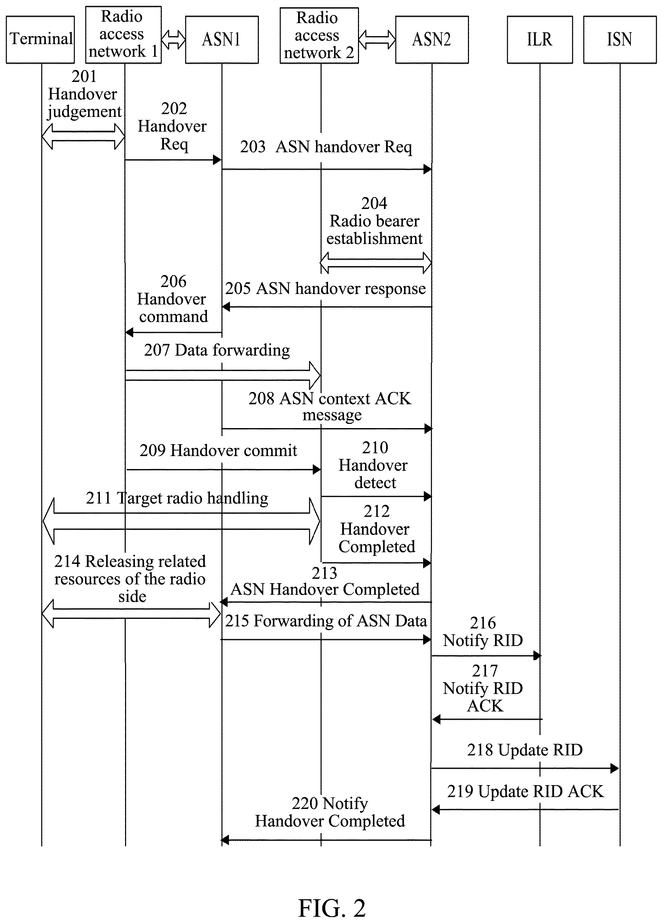

FIG. 2 shows a method for implementing terminal handover, wherein, an ASN1 and an ASN2 are access service nodes; an ISN is a gateway by which a network with ID/Locator separation architecture intercommunicates with a traditional Internet; an ILR is an identity location register which stores AID-RID mapping information of the terminal; a radio access network 1 and a radio access network 2 provide service of accessing the ASN1 and the ASN2 respectively for the terminal. Assuming that the terminal initially accesses the ASN1 and establishes an IP communication connection with an application server in the Internetwork by the ISN. During the process of the service, a handover of the terminal to the ASN2 occurs.

Before the terminal handover, the path of a data stream is: the terminal → the radio access network 1 → ASN1 → ISN → Internet; for facilitating description, in the present embodiment, the access network 1 is called as a source access network, and the access network 2 is called as a target access network; and the ASN1 is called as a source ASN (or may be called as a handover-out ASN), and ASN2 is called as a target ASN (or may be called as a handover-in ASN).

A specific flow comprises the following steps.

In step 201, the source access network judges whether the terminal needs a cross-ASN handover through interaction and detection with the terminal, if a cross-ASN handover is needed, the next step is executed;

The source access network may judge whether the target cell to which the terminal is switched belongs to another ASN according to the configuration information, to determine whether a cross-ASN handover occurs. In another embodiment, the source access network may also send the information of the target cell to the source ASN, and the source ASN judges whether a cross-ASN handover occurs.

An existing detection technology, such as WCDMA, CDMA2000 or TD-SCDMA detection technology may be adopted in the present embodiment.

This step is a Decision Handover process. The decision of handover may be executed by the terminal.

In step 202, the source access network sends a handover request (Handover Req) message to the source ASN, to notify the source ASN that the terminal needs a handover, wherein the ID of the source access network and the ID of the target access network are carried in the Handover Req message;

The selection of the access network may be implemented by adopting an existing network selecting technology, such as WCDMA, CDMA2000 or TD-SCDMA technology.

In step 203, the source ASN sends an ASN handover request (ASN handover Req) to the target ASN, and sends information such as the AID of the terminal, context information in the ASN, radio parameters and the ID of target access network;
In step 204, the target ASN establishes a bearer directed towards the radio side for the terminal according to the radio parameter information in the ASN handover req message and the context information in the ASN;
the radio parameters comprise: QOS (Quality of Service), serial number and priority level, and so on.

This step is a Radio Establishment process.

In step 205, the target ASN sends an ASN handover response to the source ASN, and sends to the source ASN the bearer information established for the terminal and directed towards the radio side, and notifies the source ASN that the target ASN is ready;

In step 206, after receiving the bearer information established for the terminal which is directed towards the radio side and is sent by the target ASN, the source ASN informs the source access network to perform forwarding of data (Handover command), and forwards the bearer information established for the terminal and directed towards to the radio side to the source access network;

In step 207, forwarding of data is executed between the source access network and the target access network, the source access network forwards to the target access network the downlink data that have not been sent to the terminal, and forwards the related bearer information of the terminal in the source access network to the target access network according to the bearer information established by the target ASN for the terminal and directed towards the radio side;

For example, two bearer links are successfully established in the target access network, while three bearer links are established in the source access network, then the source access network only needs to forward the two pieces of corresponding bearer information to the target access network.

When the two access networks can not intercommunicate directly, the ASN performs the forwarding of data; when the ASN forwards the data, only a routing in the IP layer is required, and the content of the data message will not be changed.

In step 208, the source ASN returns an ASN handover acknowledgement (ASN handover ACK) message to the target ASN, and sends the user-related information of the terminal to the target ASN by an ASN context acknowledgement (ASN Context ACK) message, the user-related information comprises: AID-RID mapping information of the terminal, charged data and information of the correspondent node of the terminal, and so on;
209, the source access network sends the context information related to the radio side of the terminal to the target access network (Handover commit);
210, the target access network informs the target ASN that the target access network has entered a state of providing service (Handover detect);
211, the terminal interacts with the target access network to perform application and configuration of radio resources, for example to obtain information such as frequency point, channel and rate required by communication; (Target Radio handling);
   After this interaction is completed, the terminal may send uplink data by the target access network.
212, the target access network sends a Handover Completed message to the target ASN, to inform the target ASN that the handover of the access network has been completed;
213, the target ASN sends an ASN Handover Completed message to the source ASN, to inform the source ASN that the handover of the target ASN has been completed, and to inform the source ASN to release related resources of the radio side;
In step 214, the source ASN releases related resources of the radio side;
In step 215, during the handover, the source ASN, if receiving a data packet sent to the terminal, forwards the data packet to the target ASN (Forwarding of ASN Data), and the source ASN, when forwarding the data packet, may judge the current state, and the data packet may be sent to the source network if the handover is not completed yet, and then forwarded to the target access network by the source access network; or the data packet may be cached locally by the source ASN and forwarded to the target ASN by a channel after the handover;
In order to make full use of an existing backbone network, a data packet between ASNs is a standard IP packet, which is guaranteed to be capable of being routed in the IP backbone network.

In step 216, the target ASN assigns to the terminal an RID (or may be called the RID of the target ASN) pointing to the ASN itself, and informs, through a Notify RID message, the ILR of the terminal home domain to update the location information of the terminal, wherein the message carries the AID and RID information of the terminal;

The data message may be routed to the target ASN according to the RID pointing to the target ASN.

In step 217, the identity location register, after receiving the updated AID and RID of the terminal, updates the locally stored AID-RID mapping information of the terminal, and returns an acknowledgement message (Notify RID ACK) to the target ASN;
In step 218, the target ASN sends an RID update message (Update RID) to the ISN through which the correspondent node of the terminal passes, and informs the related ISN to update the RID of the terminal;
if the terminal connects with multiple application servers, and the paths reaching the multiple application servers do not pass through the same ISN, then the ISN through which the path of each application server passes needs to be informed of the updated RID of the terminal.

In this embodiment, only one ISN is listed for simplifying the description.

In other embodiment, information of the correspondent node of the terminal (including AID and RID of the correspondent node) may also be sent to the ILR by the source ASN, the target ASN obtains the information of the correspondent node from the ILR, or the ISN though which the terminal communicates with the correspondent node may be informed of the updated RID of the terminal by the ILR according to the information of the correspondent node.

In step 219, the ISN through which the communication path between the terminal and the correspondent node passes updates the locally stored AID-RID mapping information of the terminal, and sends a message for acknowledging completion of RID update (Update RID ACK) message to the target ASN;

In step 220, the target ASN sends a Notify Handover Completed message to the source ASN, to notify the source ASN to release each type of resources related to the terminal, and the handover is finished.

After the handover is completed, the path of the data stream is: the terminal → radio access point network 2 → ASN 2 → ISN → Internet.

The interface to the access network control device in the embodiment may be extended flexibly in implementation.

The ASN in the present invention comprises a handover-out control unit and a handover-in control unit;
The handover-out control unit is used to: after knowing that the terminal needs a handover, make a request for a handover to the handover-in ASN; and after receiving a response from the handover-in ASN, send information of the correspondent node of the terminal to the handover-in ASN, or send the information of the correspondent node of the terminal to the ILR in the terminal home domain;
the handover-in control unit is used to respond to the received handover request and, after receiving the information of the correspondent node of the terminal and the handover with the handover-out ASN is completed, assign to the terminal a location identifier pointing to the ASN itself; and send updated mapping information of the identity identifier and the location identifier of the terminal to the ISN by which the terminal communicates with the correspondent node in the traditional network according to the information of the correspondent node of the terminal, or assign to the terminal a location identifier pointing to the ASN itself after the handover with the handover-out ASN is completed; and update the mapping information of the identity identifier and the location identifier of the terminal stored in the ILR of the terminal home domain;
the ILR sends the updated mapping information of the identity identifier and the location identifier of the terminal to the ISN by which the terminal communicates with the correspondent node in the traditional network according to the information of the correspondent node of the terminal, or sends the information of correspondent node of the terminal to the handover-in control unit of the handover-in ASN.

The above description is only the preferred embodiments of the present invention and it is not intended to limit the present invention, the scope of the invention is to be determined by the appended claims.

Those of ordinary skill in the art should understand that the whole or part of steps of the above-mentioned method may be completed by instructing relevant hardware with program, the program may be stored in a computer readable storage medium such as a read only memory, a disk or a compact disk. Alternatively, the whole or part of steps of the above-mentioned embodiments may also be implemented using one or more integrated circuits. Correspondingly, each module/unit in the above-mentioned embodiments may be implemented in a form of hardware, or may be implemented in a form of software function module. The present invention is not limited to any specific form of combination of hardware and software.

### Industrial Applicability

The methods according to the present invention can ensure that an on-going communication service between a terminal and a traditional network can not be interrupted by a handover during a process of handover of the ASN of the terminal, and the handover according to the present invention is fast so that a subscriber does not feel the process of the handover, and the upper-layer service maintains continuity; and can support handover processing when the terminal communicates with multiple correspondent nodes; there is data forwarding mechanism between ASNs by which data may be forwarded to a handover-to ASN, thus reducing the probability of data packet dropout.

## Claims

1. A method for implementing terminal handover, which is applied in the case of a network with ID/Locator separation architecture intercommunicating with a traditional Internet Protocol, IP network, wherein, in the network with ID/Locator separation architecture, an Access Identifier, AID serves as an identity identifier of a terminal, and a Routing Identifier, RID serves as a location identifier of the terminal, the terminal in the network with ID/Locator separation architecture communicates with a correspondent node in the traditional IP network through an Intercommunication Service Node, ISN, the ISN is a node through which the network with ID/Locator separation architecture intercommunicates with the traditional IP network, and the method comprises:
when the terminal communicates with the correspondent node in the traditional IP network, a source Access Service Node, ASN knowing the terminal needs a handover, and making a request for a handover to a target ASN (202);
the target ASN responding to the request of the source ASN (205), the source ASN sending information of the correspondent node in the traditional IP network to the target ASN (208); and
after the handover between the source ASN and the target ASN is completed, the target ASN assigning to the terminal a RID pointing to the target ASN itself; informing, through a Notify RID message, an identity location register, ILR, of a terminal home domain to update location information of the terminal, wherein the Notify RID message carries the AID and RID information of the terminal (216); and sending updated AID-RID mapping information of the terminal to the ISN according to the information of the correspondent node sent by the source ASN;
the ISN through which the terminal communicates with the correspondent node in the traditional IP network updating the AID-RID mapping information of the terminal locally saved, and sending a message for acknowledging completion of RID update to the target ASN (219).

2. The method according to claim 1, further comprising:
if the terminal has multiple correspondent nodes in the traditional IP network, and it is not a same ISN through which the terminal communicates with the multiple correspondent nodes, then the target ASN sending the updated AID-RID mapping information of the terminal to each ISN through which the terminal communicates with the multiple correspondent nodes (218).

3. The method according to claim 1, wherein,
after the step of the target ASN assigning to the terminal a RID pointing to the target ASN itself, the method further comprises: updating the AID-RID mapping information of the terminal stored in the ILR of the home domain of the terminal (217).

4. The method according to claim 1, wherein:
the message for acknowledging completion of RID update sent by the ISN through which the terminal communicates with the correspondent node in the traditional IP network is a RID update acknowledge (Update RID ACK) message.

5. The method according to claim 1, wherein, the step of the source ASN knowing that the terminal needs a handover comprises:
the terminal performing interaction and detection with a source access network that the terminal accesses, and the terminal, the source access network or the source ASN that the terminal accesses judging whether the terminal needs a cross-ASN handover (201);
if the source access network judges a cross-ASN handover is needed, notifying the source ASN that the terminal needs a handover; and
if the terminal judges a cross-ASN handover is needed, notifying the source access network that a handover is needed, and then the source access network notifying the source ASN that the terminal needs a handover.

6. A method for implementing terminal handover, which is applied in the case of a network with ID/Locator separation architecture intercommunicating with a traditional Internet Protocol, IP network, wherein, in the network with ID/Locator separation architecture, an Access Identifier, AID serves as an identity identifier of a terminal, and a Routing Identifier, RID serves as a location identifier of the terminal, the terminal in the network with ID/Locator separation architecture communicates with a correspondent node in the traditional IP network through an Intercommunication Service Node, ISN, the ISN is a node through which the network with ID/Locator separation architecture intercommunicates with the traditional IP network, and the method comprises:
when the terminal communicates with the correspondent node in the traditional IP network, a source Access Service Node, ASN knowing that the terminal needs a handover, and making a request for a handover to a target ASN (202);
the target ASN responding to the request of the source ASN (205), the source ASN sending information of the correspondent node in the traditional IP network to an Identity Location Register, ILR of a home domain of the terminal(218);
after the handover between the source ASN and the target ASN is completed, the target ASN assigning to the terminal a RID pointing to the target ASN itself; and updating AID-RID mapping information of the terminal stored in the ILR of the home domain of the terminal (216); and
the ILR sending the updated AID-RID mapping information of the terminal to the ISN according to the information of the correspondent node in the traditional IP network (218);
the ISN through which the terminal communicates with the correspondent node in the traditional IP network updating the AID-RID mapping information of the terminal local saved, and sending a message for acknowledging completion of RID update to the target ASN (219).

7. A system with an ID/Locator separation architecture, comprising a source access service node ASN, a target access service node ASN, an identity location register ILR and an intercommunication service node ISN, the source and the target ASN being a boundary node adjoining a radio access network and a packet data network, wherein:
the ILR is configured to: store mapping information of an identity identifier and a location identifier of a terminal and provide a function of querying the location identifier;
the ISN is configured to: implement intercommunication between the ID/Locator separation architecture and a traditional Internet Protocol, IP network; the terminal in the ID/Locator separation architecture communicates with a correspondent node in the traditional IP network through the ISN;
the source and the target ASN are configured to: provide an access service for the terminal to access the packet data network, assign a location identifier for the accessing terminal, and maintain the mapping information of the identity identifier and the location identifier of the terminal; and
the target ASN is configured to: respond to a handover request made by the source ASN and, after receiving information of the correspondent node in the traditional IP network and the handover with the source ASN being completed, assign to the terminal a location identifier pointing to the target ASN itself; inform, through a Notify RID message, an identity location register, ILR, of a terminal home domain to update location information of the terminal, wherein the Notify RID message carries the AID and RID information of the terminal; and send updated mapping information of the identity identifier and the location identifier of the terminal to the ISN through which the terminal communicates with the correspondent node in the traditional IP network according to the information of the correspondent node;
the ISN is further configured to: after receiving the mapping information of the identity identifier and the location identifier of the terminal, update the locally stored mapping information of the identity identifier and the location identifier of the terminal, and send a message for acknowledging completion of location identified update to the second ASN.

8. The system according to claim 7, wherein,
the source ASN is further configured to: after knowing that the terminal needs a handover, make a request for a handover to the target ASN; and after receiving a response from the target ASN, send the information of the correspondent node in the traditional IP network to the target ASN.

9. The system according to claim 7, wherein,
when the terminal has multiple correspondent nodes in the traditional IP network, and it is not a same ISN through which the terminal communicates with the multiple correspondent nodes, the target ASN is further configured to: send the updated mapping information of the identity identifier and the location identifier of the terminal to each ISN through which the terminal communicates with the multiple correspondent nodes.

10. The system according to claim 7, wherein,
the target ASN is further configured to: after assigning to the terminal the location identifier pointing to the target ASN itself, update mapping information of the identity identifier and the location identifier of the terminal stored in the ILR of a home domain of the terminal.

11. A system with an ID/Locator separation architecture, comprising an access service node ASN, an identity location register ILR and an intercommunication service node ISN, the ASN being a boundary node adjoining a radio access network and a packet data network, wherein:
the ILR is configured to: store mapping information of an identity identifier and a location identifier of a terminal and provide a function of querying the location identifier;
the ISN is configured to: implement intercommunication between the ID/Locator separation architecture and a traditional Internet Protocol, IP network; the terminal in the ID/Locator separation architecture communicates with a correspondent node in the traditional IP network through the ISN;
the ASN is configured to: provide an access service from a terminal to the packet data network, assign a location identifier for the accessing terminal, and maintain mapping information of the identity identifier and the location identifier of the terminal;
the ASN comprises: a handover-out control unit and a handover-in control unit;
the handover-out control unit is configured to: after knowing that the terminal needs a handover, make a request for a handover to a handover-in ASN; and after receiving a response from the handover-in ASN, send information of a correspondent node in the traditional IP network to the ILR of a home domain of the terminal;
the handover-in control unit is configured to: respond to a received handover request, and after the handover with a handover-out ASN is completed, assign to the terminal a location identifier pointing to the handover-in ASN itself; and update the mapping information of the identity identifier and the location identifier of the terminal stored in the ILR of the home domain of the terminal;
the ILR is further configured to: send the updated mapping information of the identity identifier and the location identifier of the terminal to the ISN through which the terminal communicates with the correspondent node in the traditional IP network according to the information of the correspondent node;
the ISN is further configured to: after receiving the mapping information of the identity identifier and the location identifier of the terminal, update the locally stored mapping information of the identity identifier and the location identifier of the terminal, and send a message for acknowledging completion of location identified update to the handover-in ASN.

## Patentansprüche

1. Verfahren zum Implementieren einer Endgerät-Übergabe, das im Fall eines Netzes mit ID/Locator-Trennungsarchitektur angewendet wird, das mit einem traditionellen Internet Protocol (IP)-Netz kommuniziert, wobei in dem Netz mit ID/Locator-Trennungsarchitektur ein Zugangsidentifikator (Access Identifier, AID) als ein Identitätsidentifikator eines Endgerätes dient und ein Routungsidentifikator (Routing Identifier, RID) als ein Standortidentifikator des Endgerätes dient, wobei das Endgerät in dem Netz mit ID/Locator-Trennungsarchitektur mit einem Korrespondenzknoten in dem traditionellen IP-Netz über einen Interkommunikationsdienstknoten (Intercommunication Service Node, ISN) kommuniziert, wobei der ISN ein Knoten ist, über den das Netz mit ID/Locator-Trennungsarchitektur mit dem traditionellen IP-Netz kommuniziert, und wobei das Verfahren Folgendes umfasst:
wenn das Endgerät mit dem Korrespondenzknoten in dem traditionellen IP-Netz kommuniziert, so weiß ein Quellen-Zugangsdienstknoten (Access Service Node, ASN), dass das Endgerät eine Übergabe benötigt, und stellt eine Anforderung für eine Übergabe an einen Ziel-ASN (202);
der Ziel-ASN antwortet auf die Anforderung des Quellen-ASN (205), und der Quellen-ASN sendet Informationen des Korrespondenzknotens in dem traditionellen IP-Netz an den Ziel-ASN (208); und
nachdem die Übergabe zwischen dem Quellen-ASN und dem Ziel-ASN vollendet ist, weist der Ziel-ASN dem Endgerät einen RID zu, der auf den Ziel-ASN selbst zeigt; informiert mittels einer Notify RID-Nachricht ein Identitätsstandortregister (Identity Location Register, ILR) einer Endgerät-Heimatdomäne, Standortinformationen des Endgerätes zu aktualisieren, wobei die Notify RID-Nachricht die AID- und RID-Informationen des Endgerätes transportiert (216); und sendet aktualisierte AID-RID-Mapping-Informationen des Endgerätes an den ISN gemäß den durch den Quellen-ASN gesendeten Informationen des Korrespondenzknotens;
der ISN, durch den das Endgerät mit dem Korrespondenzknoten in dem traditionellen IP-Netz kommuniziert, aktualisiert die lokal gespeicherten AID-RID-Mapping-Informationen des Endgerätes und sendet eine Nachricht zum Bestätigen der Vollendung der RID-Aktualisierung an den Ziel-ASN (219).

2. Verfahren nach Anspruch 1, das des Weiteren Folgendes umfasst:
falls das Endgerät mehrere Korrespondenzknoten in dem traditionellen IP-Netz hat, und es nicht derselbe ISN ist, durch den das Endgerät mit den mehreren Korrespondenzknoten kommuniziert, so sendet der Ziel-ASN die aktualisierten AID-RID-Mapping-Informationen des Endgerätes an jeden ISN, durch den das Endgerät mit den mehreren Korrespondenzknoten kommuniziert (218).

3. Verfahren nach Anspruch 1, wobei das Verfahren nach dem Schritt, in dem der Ziel-ASN dem Endgerät einen RID zuweist, der auf den Ziel-ASN selbst zeigt, des Weiteren umfasst, die in dem ILR der Heimatdomäne des Endgerätes gespeicherten AID-RID-Mapping-Informationen des Endgerätes zu aktualisieren (217).

4. Verfahren nach Anspruch 1, wobei:
die Nachricht zum Bestätigen der Vollendung der RID-Aktualisierung, die durch den ISN gesendet wird, durch den das Endgerät mit dem Korrespondenzknoten in dem traditionellen IP-Netz kommuniziert, eine RID Update Acknowledge (Update RID ACK)-Nachricht ist.

5. Verfahren nach Anspruch 1, wobei der Schritt, dass der Quellen-ASN weiß, dass das Endgerät eine Übergabe braucht, Folgendes umfasst:
das Endgerät führt eine Interaktion und Detektion mit einem Quellen-Zugangsnetz aus, auf das das Endgerät zugreift, und das Endgerät, das Quellen-Zugangsnetz oder der Quellen-ASN, auf das das Endgerät zugreift, beurteilt, ob das Endgerät eine Kreuz-ASN-Übergabe braucht (201);
falls das Quellen-Zugangsnetz beurteilt, dass eine Kreuz-ASN-Übergabe benötigt wird, so wird der Quellen-ASN benachrichtigt, dass das Endgerät eine Übergabe braucht; und
falls das Endgerät beurteilt, dass eine Kreuz-ASN-Übergabe benötigt wird, so wird das Quellen-Zugangsnetz benachrichtigt, dass eine Übergabe benötigt wird, und dann benachrichtigt das Quellen-Zugangsnetz den Quellen-ASN, dass das Endgerät eine Übergabe braucht.

6. Verfahren zum Implementieren einer Endgerät-Übergabe, das im Fall eines Netzes mit ID/Locator-Trennungsarchitektur angewendet wird, das mit einem traditionellen Internet Protocol (IP)-Netz kommuniziert, wobei in dem Netz mit ID/Locator-Trennungsarchitektur ein Zugangsidentifikator (Access Identifier, AID) als ein Identitätsidentifikator eines Endgerätes dient und ein Routungsidentifikator (Routing Identifier, RID) als ein Standortidentifikator des Endgerätes dient, wobei das Endgerät in dem Netz mit ID/Locator-Trennungsarchitektur mit einem Korrespondenzknoten in dem traditionellen IP-Netz über einen Interkommunikationsdienstknoten (Intercommunication Service Node, ISN) kommuniziert, wobei der ISN ein Knoten ist, über den das Netz mit ID/Locator-Trennungsarchitektur mit dem traditionellen IP-Netz kommuniziert, und wobei das Verfahren Folgendes umfasst:
wenn das Endgerät mit dem Korrespondenzknoten in dem traditionellen IP-Netz kommuniziert, so weiß ein Quellen-Zugangsdienstknoten (Access Service Node, ASN), dass das Endgerät eine Übergabe braucht, und stellt eine Anforderung für eine Übergabe an einen Ziel-ASN (202);
der Ziel-ASN antwortet auf die Anforderung des Quellen-ASN (205), und der Quellen-ASN sendet Informationen des Korrespondenzknotens in dem traditionellen IP-Netz zu einem Identity Location Register (ILR) einer Heimatdomäne des Endgerätes(218);
nachdem die Übergabe zwischen dem Quellen-ASN und dem Ziel-ASN vollendet ist, weist der Ziel-ASN dem Endgerät einen RID zu, der auf den Ziel-ASN selbst zeigt; und aktualisiert in dem ILR der Heimatdomäne des Endgerätes gespeicherte AID-RID-Mapping-Informationen des Endgerätes (216); und
das ILR sendet die aktualisierten AID-RID-Mapping-Informationen des Endgerätes an den ISN gemäß den Informationen des Korrespondenzknotens in dem traditionellen IP-Netz (218);
der ISN, durch den das Endgerät mit dem Korrespondenzknoten in dem traditionellen IP-Netz kommuniziert, aktualisiert die lokal gespeicherten AID-RID-Mapping-Informationen des Endgerätes und sendet eine Nachricht zum Bestätigen der Vollendung der RID-Aktualisierung an den Ziel-ASN (219).

7. System mit einer ID/Locator-Trennungsarchitektur, das einen Quellen-Zugangsdienstknoten (Access Service Node, ASN), einen Ziel-Zugangsdienstknoten (Access Service Node, ASN), ein Identitätsstandortregister (Identity Location Register, ILR) und einen Interkommunikationsdienstknoten (Intercommunication Service Node, ISN) umfasst, wobei der Quellen- und der Ziel-ASN ein Grenzknoten sind, der an ein Funkzugangsnetz und ein Paketdatennetz grenzt, wobei:
das ILR konfiguriert ist zum: Speichern von Mapping-Informationen eines Identitätsidentifikators und eines Standortidentifikators eines Endgerätes und Bereitstellen einer Funktion zum Abfragen des Standortidentifikators;
der ISN konfiguriert ist zum: Implementieren einer Interkommunikation zwischen der ID/Locator-Trennungsarchitektur und einem traditionellen Internet Protocol (IP-Netz);
das Endgerät in der ID/Locator-Trennungsarchitektur mit einem Korrespondenzknoten in dem traditionellen IP-Netz über den ISN kommuniziert;
der Quellen- und der Ziel-ASN konfiguriert sind zum: Bereitstellen eines Zugangsdienstes für das Endgerät zum Zugang zu dem Paketdatennetz, Zuweisen eines Standortidentifikators für das zugreifende Endgerät, und Verwalten der Mapping-Informationen des Identitätsidentifikators und des Standortidentifikators des Endgerätes; und
der Ziel-ASN konfiguriert ist zum: Antworten auf eine durch den Quellen-ASN vorgenommene Übergangsanforderung und, nachdem der Empfang von Informationen des Korrespondenzknotens in dem traditionellen IP-Netz und die Übergabe mit dem Quellen-ASN vollendet sind, Zuweisen, zu dem Endgerät, eines Standortidentifikators, der auf den Ziel-ASN selbst zeigt; Informieren, durch eine Notify RID-Nachricht, eines Identitätsstandortregisters (Identity Location Register, ILR) einer Endgerät-Heimatdomäne, Standortinformationen des Endgerätes zu aktualisieren, wobei die Notify RID-Nachricht die AID- und RID-Informationen des Endgerätes transportiert; und Senden aktualisierter Mapping-Informationen des Identitätsidentifikators und des Standortidentifikators des Endgerätes an den ISN, durch den das Endgerät mit dem Korrespondenzknoten in dem traditionellen IP-Netz kommuniziert, gemäß den Informationen des Korrespondenzknotens;
wobei der ISN des Weiteren für Folgendes konfiguriert ist: nach dem Empfangen der Mapping-Informationen des Identitätsidentifikators und des Standortidentifikators des Endgerätes, Aktualisieren der lokal gespeicherten Mapping-Informationen des Identitätsidentifikator und des Standortidentifikators des Endgerätes, und Senden einer Nachricht zum Bestätigen der Vollendung der Standortidentifizierungsaktualisierung an den zweiten ASN.

8. System nach Anspruch 7, wobei der Quellen-ASN des Weiteren für Folgendes konfiguriert ist: nach dem Wissen, dass das Endgerät eine Übergabe braucht, Vornehmen einer Anforderung für eine Übergabe an den Ziel-ASN; und nach dem Empfangen einer Antwort von dem Ziel-ASN, Senden der Informationen des Korrespondenzknotens in dem traditionellen IP-Netz an den Ziel-ASN.

9. System nach Anspruch 7, wobei, wenn das Endgerät mehrere Korrespondenzknoten in dem traditionellen IP-Netz hat, und es nicht derselbe ISN ist, durch den das Endgerät mit den mehreren Korrespondenzknoten kommuniziert, der Ziel-ASN des Weiteren dafür konfiguriert ist, die aktualisierten Mapping-Informationen des Identitätsidentifikators und des Standortidentifikators des Endgerätes an jeden ISN zu senden, durch den das Endgerät mit den mehreren Korrespondenzknoten kommuniziert.

10. System nach Anspruch 7, wobei der Ziel-ASN des Weiteren dafür konfiguriert ist, nach dem Zuweisen, an das Endgerät, des Standortidentifikators, der auf den Ziel-ASN selbst zeigt, Mapping-Informationen des Identitätsidentifikators und des Standortidentifikators des Endgerätes, die in dem ILR einer Heimatdomäne des Endgerätes gespeichert sind, zu aktualisieren.

11. System mit einer ID/Locator-Trennungsarchitektur, das einen Zugangsdienstknoten (Access Service Node, ASN), ein Identitätsstandortregister (Identity Location Register, ILR) und einen Interkommunikationsdienstknoten (Intercommunication Service Node, ISN) umfasst, wobei der ASN ein Grenzknoten ist, der an ein Funkzugangsnetz und ein Paketdatennetz grenzt, wobei:
das ILR konfiguriert ist zum: Speichern von Mapping-Informationen eines Identitätsidentifikators und eines Standortidentifikators eines Endgerätes und Bereitstellen einer Funktion zum Abfragen des Standortidentifikators;
der ISN konfiguriert ist zum: Implementieren einer Interkommunikation zwischen der ID/Locator-Trennungsarchitektur und einem traditionellen Internet Protocol (IP-Netz); wobei das Endgerät in der ID/Locator-Trennungsarchitektur mit einem Korrespondenzknoten in dem traditionellen IP-Netz über den ISN kommuniziert;
der ASN konfiguriert ist zum: Bereitstellen eines Zugangsdienstes von einem Endgerät zu dem Paketdatennetz, Zuweisen eines Standortidentifikators für das zugreifende Endgerät, und Verwalten von Mapping-Informationen des Identitätsidentifikators und des Standortidentifikators des Endgerätes;
der ASN umfasst: eine Übergabe-out-Steuereinheit und eine Übergabe-in-Steuereinheit;
wobei die Übergabe-out-Steuereinheit für Folgendes konfiguriert ist: nach dem Wissen, dass das Endgerät eine Übergabe braucht, Vornehmen einer Anforderung für eine Übergabe an einen Übergabe-in-ASN; und nach dem Empfangen einer Antwort von dem Übergabe-in-ASN, Senden von Informationen eines Korrespondenzknotens in dem traditionellen IP-Netz an das ILR einer Heimatdomäne des Endgerätes;
wobei die Übergabe-in-Steuereinheit für Folgendes konfiguriert ist: Antworten auf eine empfangenen Übergabeanforderung, und nachdem die Übergabe mit einem Übergabe-out-ASN vollendet ist, Zuweisen, an das Endgerät, eines Standortidentifikators, der auf den Übergabe-in-ASN selbst zeigt; und Aktualisieren der Mapping-Informationen des Identitätsidentifikators und des Standortidentifikators des Endgerätes, die in dem ILR der Heimatdomäne des Endgerätes gespeichert sind;
wobei das ILR des Weiteren konfiguriert zum: Senden der aktualisierten Mapping-Informationen des Identitätsidentifikators und des Standortidentifikators des Endgerätes an den ISN, durch den das Endgerät mit dem Korrespondenzknoten in dem traditionellen IP-Netz kommuniziert, gemäß den Informationen des Korrespondenzknotens;
wobei der ISN des Weiteren für Folgendes konfiguriert ist: nach dem Empfangen der Mapping-Informationen des Identitätsidentifikators und des Standortidentifikators des Endgerätes, Aktualisieren der lokal gespeicherten Mapping-Informationen des Identitätsidentifikators und des Standortidentifikators des Endgerätes, und Senden einer Nachricht zum Bestätigen der Vollendung der Standortidentifizierungsaktualisierung an den Übergabe-in-ASN.

## Revendications

1. Procédé de mise en oeuvre d'un transfert intercellulaire de terminal, qui est appliqué dans le cas d'un réseau avec une architecture de séparation ID/localisateur en intercommunication avec un réseau de protocole Internet, IP, traditionnel, dans lequel, dans le réseau avec une architecture de séparation ID/localisateur, un identifiant d'accès, AID, sert d'identifiant d'identité d'un terminal, et un identifiant d'acheminement, RID, sert d'identifiant d'emplacement du terminal, le terminal dans le réseau avec une architecture de séparation ID/localisateur communique avec un noeud correspondant dans le réseau IP traditionnel par l'intermédiaire d'un noeud de service d'intercommunication, ISN, l'ISN est un noeud par l'intermédiaire duquel le réseau avec une architecture de séparation ID/localisateur intercommunique avec le réseau IP traditionnel, et le procédé comprend :
lorsque le terminal communique avec le noeud correspondant dans le réseau IP traditionnel, un noeud de service d'accès, ASN, source sait que le terminal a besoin d'un transfert intercellulaire, et formule une demande de transfert intercellulaire à un ASN cible (202) ;
l'ASN cible répond à la demande de l'ASN source (205), l'ASN source envoie des informations du noeud correspondant dans le réseau IP traditionnel à l'ASN cible (208) ; et
après la fin du transfert intercellulaire entre l'ASN source et l'ASN cible, l'ASN cible assigne, au terminal, un RID pointant vers l'ASN cible ; informe, par l'intermédiaire d'un message Notify RID, un registre d'emplacement d'identité, ILR, d'un domaine de rattachement de terminal pour mettre à jour des informations d'emplacement du terminal, dans lequel le message Notify RID porte les informations AID et RID du terminal (216) ; et envoie des informations de mappage AID-RID mises à jour du terminal à l'ISN en fonction des informations du noeud correspondant envoyées par l'ASN source ;
l'ISN, par l'intermédiaire duquel le terminal communique avec le noeud correspondant dans le réseau IP traditionnel, met à jour les informations de mappage AID-RID du terminal localement enregistrées, et envoie un message d'accusé de réception de fin de mise à jour de RID à l'ASN cible (219).

2. Procédé selon la revendication 1, comprenant en outre :
si le terminal comporte de multiples noeuds correspondants dans le réseau IP traditionnel et le terminal communique avec les multiples noeuds correspondants par l'intermédiaire de différents ISN, alors l'ASN cible envoie les informations de mappage AID-RID mises à jour du terminal à chaque ISN par l'intermédiaire duquel le terminal communique avec les multiples noeuds correspondants (218).

3. Procédé selon la revendication 1, dans lequel
après l'étape à laquelle l'ASN cible assigne, au terminal, un RID pointant vers l'ASN cible, le procédé comprend en outre : la mise à jour des informations de mappage AID-RID du terminal mémorisées dans l'ILR du domaine de rattachement du terminal (217).

4. Procédé selon la revendication 1, dans lequel :
le message d'accusé de réception de fin de mise à jour de RID envoyé par l'ISN par l'intermédiaire duquel le terminal communique avec le noeud correspondant dans le réseau IP traditionnel est un message d'accusé de réception de mise à jour de RID (Update RID ACK).

5. Procédé selon la revendication 1, dans lequel l'étape à laquelle l'ASN source sait que le terminal a besoin d'un transfert intercellulaire comprend :
le terminal effectue une interaction et une détection avec un réseau accès source auquel le terminal accède, et le terminal, le réseau d'accès source ou l'ASN source auquel le terminal accède juge si le terminal a besoin d'un transfert intercellulaire à travers l'ASN (201) ;
si le réseau d'accès source juge qu'un transfert intercellulaire à travers l'ASN est nécessaire, la notification à l'ASN source que le terminal a besoin d'un transfert intercellulaire ; et
si le terminal juge qu'un transfert intercellulaire à travers l'ASN est nécessaire, la notification, au réseau d'accès source, qu'un transfert intercellulaire est nécessaire, puis la notification, à l'ASN source par le réseau d'accès source, que le terminal a besoin d'un transfert intercellulaire.

6. Procédé de mise en oeuvre d'un transfert intercellulaire de terminal, qui est appliqué dans le cas d'un réseau avec une architecture de séparation ID/localisateur en intercommunication avec un réseau de protocole Internet, IP, traditionnel, dans lequel, dans le réseau avec une architecture de séparation ID/localisateur, un identifiant d'accès, AID, sert d'identifiant d'identité d'un terminal, et un identifiant d'acheminement, RID, sert d'identifiant d'emplacement du terminal, le terminal dans le réseau avec une architecture de séparation ID/localisateur communique avec un noeud correspondant dans le réseau IP traditionnel par l'intermédiaire d'un noeud de service d'intercommunication, ISN, l'ISN est un noeud par l'intermédiaire duquel le réseau avec une architecture de séparation ID/localisateur intercommunique avec le réseau IP traditionnel, et le procédé comprend :
lorsque le terminal communique avec le noeud correspondant dans le réseau IP traditionnel, un noeud de service d'accès, ASN, source sait que le terminal a besoin d'un transfert intercellulaire, et formule une demande de transfert intercellulaire à un ASN cible (202) ;
l'ASN cible répond à la demande de l'ASN source (205), l'ASN source envoie des informations du noeud correspondant dans le réseau IP traditionnel à un registre d'emplacement d'identité, ILR, d'un domaine de rattachement du terminal (218) ;
après la fin du transfert intercellulaire entre l'ASN source et l'ASN cible, l'ASN cible assigne, au terminal, un RID pointant vers l'ASN cible ; et met à jour des informations de mappage AID-RID du terminal mémorisées dans l'ILR du domaine de rattachement du terminal (216) ; et
l'ILR envoie les informations de mappage AID-RID mises à jour du terminal à l'ISN en fonction des informations du noeud correspondant dans le réseau IP traditionnel (218) ;
l'ISN par l'intermédiaire duquel le terminal communique avec le noeud correspondant dans le réseau IP traditionnel met à jour les informations de mappage AID-RID du terminal localement enregistrées, et envoie un message d'accusé de réception de fin de mise à jour de RID à l'ASN cible (219).

7. Système avec une architecture de séparation ID/localisateur, comprenant un noeud de service d'accès, ASN, source, un noeud de service d'accès, ASN, cible, un registre d'emplacement d'identité, ILR, et un noeud de service d'intercommunication, ISN, l'ASN source et l'ASN cible étant un noeud de frontière adjacent à un réseau d'accès radio et à un réseau de données en paquets, dans lequel :
l'ILR est configuré pour : mémoriser des informations de mappage d'un identifiant d'identité et d'un identifiant d'emplacement d'un terminal et fournir une fonction d'interrogation de l'identifiant d'emplacement ;
l'ISN est configuré pour : mettre en oeuvre une intercommunication entre l'architecture de séparation ID/localisateur et un réseau de protocole Internet, IP, traditionnel ; le terminal dans l'architecture de séparation ID/localisateur communique avec un noeud correspondant dans le réseau IP traditionnel par l'intermédiaire de l'ISN ;
l'ASN source et l'ASN cible sont configurés pour : fournir un service d'accès pour que le terminal accède au réseau de données en paquets, assigner un identifiant d'emplacement pour le terminal d'accès, et maintenir les informations de mappage de l'identifiant d'identité et de l'identifiant d'emplacement du terminal ; et
l'ASN cible est configuré pour : répondre à une demande de transfert intercellulaire formulée par l'ASN source et, après la réception d'informations du noeud correspondant dans le réseau IP traditionnel et la fin du transfert intercellulaire avec l'ASN source, assigner, au terminal, un identifiant d'emplacement pointant vers l'ASN cible ; informer, par l'intermédiaire d'un message Notify RID, un registre d'emplacement d'identité, ILR, d'un domaine de rattachement de terminal pour mettre à jour des informations d'emplacement du terminal, dans lequel le message Notify RID porte les informations AID et RID du terminal ; et envoyer des informations de mappage mises à jour de l'identifiant d'identité et de l'identifiant d'emplacement du terminal à l'ISN par l'intermédiaire duquel le terminal communique avec le noeud correspondant dans le réseau IP traditionnel en fonction des informations du noeud correspondant ;
l'ISN est en outre configuré pour : après la réception des informations de mappage de l'identifiant d'identité et de l'identifiant d'emplacement du terminal, mettre à jour les informations de mappage mémorisées localement de l'identifiant d'identité et de l'identifiant d'emplacement du terminal, et envoyer un message d'accusé de réception de fin de mise à jour d'identifiant d'emplacement au deuxième ASN.

8. Système selon la revendication 7, dans lequel
l'ASN source est en outre configuré pour : une fois qu'il sait que le terminal a besoin d'un transfert intercellulaire, formuler une demande de transfert intercellulaire à l'ASN cible ; et, après la réception d'une réponse en provenance de l'ASN cible, envoyer les informations du noeud correspondant dans le réseau IP traditionnel à l'ASN cible.

9. Système selon la revendication 7, dans lequel
lorsque le terminal comporte de multiples noeuds correspondants dans le réseau IP traditionnel et le terminal communique avec les multiples noeuds correspondants par l'intermédiaire de différents ISN, l'ASN cible est en outre configuré pour : envoyer les informations de mappage mises à jour de l'identifiant d'identité et de l'identifiant d'emplacement du terminal à chaque ISN par l'intermédiaire duquel le terminal communique avec les multiples noeuds correspondants.

10. Système selon la revendication 7, dans lequel
l'ASN cible est en outre configuré pour : après l'assignation, au terminal, de l'identifiant d'emplacement pointant vers l'ASN cible, mettre à jour des informations de mappage de l'identifiant d'identité et de l'identifiant d'emplacement du terminal mémorisées dans l'ILR d'un domaine de rattachement du terminal.

11. Système avec une architecture de séparation ID/localisateur, comprenant un noeud de service d'accès, ASN, un registre d'emplacement d'identité, ILR, et un noeud de service d'intercommunication, ISN, l'ASN étant un noeud de frontière adjacent à un réseau d'accès radio et à un réseau de données en paquets, dans lequel :
l'ILR est configuré pour : mémoriser des informations de mappage d'un identifiant d'identité et d'un identifiant d'emplacement d'un terminal et fournir une fonction d'interrogation de l'identifiant d'emplacement ;
l'ISN est configuré pour : mettre en oeuvre une intercommunication entre l'architecture de séparation ID/localisateur et un réseau de protocole Internet, IP, traditionnel ; le terminal dans l'architecture de séparation ID/localisateur communique avec un noeud correspondant dans le réseau IP traditionnel par l'intermédiaire de l'ISN ;
l'ASN est configuré pour : fournir un service d'accès d'un terminal au réseau de données en paquets, assigner un identifiant d'emplacement pour le terminal d'accès, et maintenir les informations de mappage de l'identifiant d'identité et de l'identifiant d'emplacement du terminal ;
l'ASN comprend : une unité de commande de sortie de transfert intercellulaire et une unité de commande d'entrée de transfert intercellulaire ;
l'unité de commande de sortie de transfert intercellulaire est configurée pour : une fois qu'elle sait que le terminal a besoin d'un transfert intercellulaire, formuler une demande de transfert intercellulaire à un ASN d'entrée de transfert intercellulaire ; et, après la réception d'une réponse en provenance de l'ASN d'entrée de transfert intercellulaire, envoyer des informations d'un noeud correspondant dans le réseau IP traditionnel à l'ILR d'un domaine de rattachement du terminal ;
l'unité de commande d'entrée de transfert intercellulaire est configurée pour : répondre à une demande de transfert intercellulaire reçue et, après la fin du transfert intercellulaire avec l'ASN de sortie de transfert intercellulaire, assigner, au terminal, un identifiant d'emplacement pointant vers l'ASN d'entrée de transfert intercellulaire ; et mettre à jour les informations de mappage de l'identifiant d'identité et de l'identifiant d'emplacement du terminal mémorisées dans l'ILR du domaine de rattachement du terminal ;
l'ILR est en outre configuré pour : envoyer les informations de mappage mises à jour de l'identifiant d'identité et de l'identifiant d'emplacement du terminal à l'ISN par l'intermédiaire duquel le terminal communique avec le noeud correspondant avec le réseau IP traditionnel en fonction des informations du noeud correspondant ;
l'ISN est en outre configuré pour : après la réception des informations de mappage de l'identifiant d'identité et de l'identifiant d'emplacement du terminal, mettre à jour les informations de mappage mémorisées localement de l'identifiant d'identité et de l'identifiant d'emplacement du terminal, et envoyer un message d'accusé de réception de fin de mise à jour d'identifiant d'emplacement à l'ASN d'entrée de transfert intercellulaire.
